# EUROPEAN PATENT SPECIFICATION

(11) **EP 4 092 317 B1**
(45) Date of publication and mention of the grant of the patent: **25.10.2023**
(21) Application number: 21174016.2
(22) Date of filing: 17.05.2021
(51) Int. Cl.: F21V 23/00, H01R 13/58, H05B 45/10, H02G 15/007

(54) **STRAIN RELIEF CONCEPT WITH PROVISION FOR WIRELESS MODULE**
ENTLASTUNGSKONZEPT MIT BEREITSTELLUNG EINES DRAHTLOSEN MODULS
CONCEPT DE RÉDUCTION DE TENSION AVEC MISE À DISPOSITION DE MODULE SANS FIL

(43) Date of publication of application: 23.11.2022
(73) Proprietor: Tridonic GmbH & Co. KG, 6851 Dornbirn (AT)
(72) Inventor: Wilson, Ian, 6850 Dornbirn (AT)
(74) Representative: Rupp, Christian

(56) References cited:
- EP-A1- 3 661 329
- WO-A1-2020/030759
- WO-A2-2011/156628

## Description

### Technical Field

The present disclosure relates to an independent application of lighting drivers devoid of an enclosure, and in particular, to a strain relief accessory for such an independent application that facilitates wireless connectivity, and an arrangement and a lighting system comprising the strain relief accessory.

### Background Art

Wireless connectivity puts forth an impressive road of success, and has found its way into lighting systems as well.

It is, however, more difficult or expensive for some lighting application than for others to actually provide the wireless connectivity. For example, in so-called "independent applications" where lighting drivers are arranged outside of an enclosure of a luminaire, wireless communication modules typically require their own strain relief or separate remote enclosure. Both options increase manufacturing expense and installation effort. WO 2011/156628 A2 discloses an independent application of a lighting driver for a lighting application, wherein the lighting driver may be enabled for wireless connectivity.

In addition, wireless communication modules may ("active") or may not ("passive") be equipped with a dedicated power supply, depending on the circumstances. Passive wireless communication modules tend to be less expensive and/or bulky than active ones, but are normally used within enclosures of luminaires and thus do not have their own strain relief.

Thus, no matter if active or passive wireless communication modules are used to provide wireless connectivity for independent applications, the result is expensive and/or bulky.

### Summary

The present disclosure provides wireless connectivity for independent applications in a more cost-efficient and space-efficient manner.

The invention is defined by a strain relief accessory as defined in claim 1. Preferred embodiments are set forth in the dependent claims.

A first aspect of the present disclosure relates to a strain relief accessory for an independent arrangement of a lighting driver devoid of an enclosure. The lighting driver comprises a wire-bound communication interface and an integrated power supply. The strain relief accessory comprises a base member including strain relief members, and cover members. The strain relief members are arranged at opposite end portions of the base member for a strain relief of termination wires of the lighting driver. The cover members are configured for a snap-on engagement of the lighting driver and for a protective coverage of the strain relief members and the termination wires. One of the cover members comprises a receptacle for a snap-on engagement of a communication module for a conversion between the wire-bound communication interface and a wire-less communication interface of the communication module.

The receptacle of the one of the cover members may be configured to arrange the communication module laterally of a connecting axis of the cover members.

The receptacle of the one of the cover members may be configured to enclose a housing of the communication module.

The base member may have a plate-like shape.

The lighting driver may comprise an emergency lighting driver.

The wire-less communication interface may comprise a Bluetooth interface.

The wire-less communication interface may be configured to set up a Bluetooth mesh.

The wire-bound communication interface may comprise a DALI interface.

The communication module may comprise a dedicated power supply.

The communication module may be configured for power supply by the integrated power supply of the lighting driver.

The conversion may be associated with a predetermined DALI channel.

A second aspect of the present disclosure relates to an arrangement. The arrangement comprises a strain relief accessory according to the first aspect or any of its implementations; a lighting driver; and a communication module for a conversion between a wire-bound communication interface of the lighting driver and a wire-less communication interface of the communication module. The lighting driver and the communication module are in a snap-on engagement with the strain relief accessory.

A third aspect of the present disclosure relates to a lighting system. The lighting system comprises an arrangement according to the second aspect, and a luminaire being configured for power supply by the arrangement.

### Advantageous Effects

The present disclosure provides a strain relief accessory which
- enables wireless connectivity in so-called "independent applications", i.e., in case of an independent arrangement of a lighting driver devoid of an enclosure,
- enables a deployment of a "passive" type of communication module devoid of a dedicated power supply, by taking advantage of the integrated power supply of the lighting driver,
- enables a deployment of a type of communication module devoid of a dedicated strain relief, by engaging the communication module in a receptacle of one of the cover members of the strain relief accessory and thus positionally fixing the communication module and the lighting driver with respect to each other,
- avoids an expensive and bulky deployment of an separate remote enclosure for the communication module,
- simplifies a wiring of the communication module and the lighting driver, as only two wires are needed in between the communication module and the lighting driver's IDPS/DALI terminals, and
- potentially improves wireless connectivity by exposing the communication module and its wireless antenna from a surrounding metal of an enclosure.

### Brief Description of Drawings

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.
FIG. 1 illustrates a strain relief accessory in accordance with the present disclosure in a disassembled condition;
FIG. 2 illustrates the strain relief accessory of FIG. 1 in an assembled condition, i.e., an arrangement in accordance with the present disclosure; and
FIG. 3 illustrates lighting systems in accordance with the present disclosure in a wire-less communications scenario.

### Detailed Descriptions of Drawings

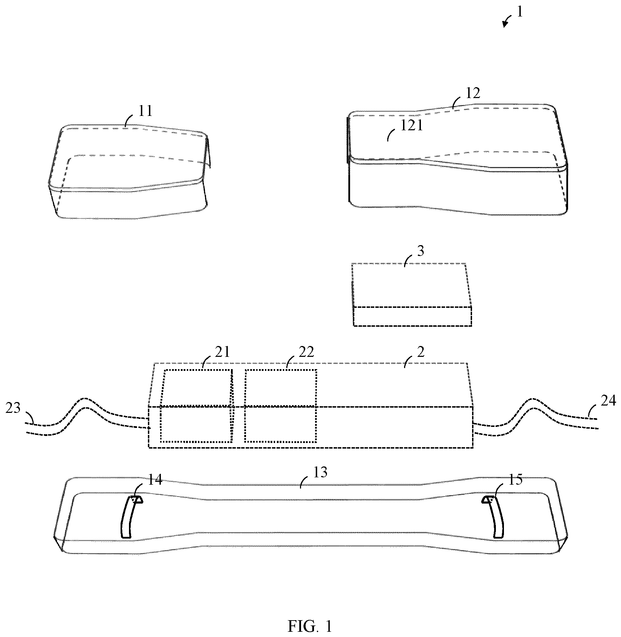

FIG. 1 illustrates a strain relief accessory 1 in accordance with the present disclosure in a disassembled condition.

The strain relief accessory 1 is intended for an independent arrangement of a lighting driver 2 devoid of an enclosure, such as an arrangement outside of an enclosure of a luminaire.

The lighting driver 2 is hinted by dotted lines to suggest that it does not form part of the strain relief accessory 1 as such. The lighting driver 2 includes a wire-bound communication interface 21 and an integrated power supply 22.

In particular, the lighting driver 2 may comprise an emergency lighting driver 2, which may be used as an emergency driver or a non-emergency driver.

The strain relief accessory 1 comprises a base member 13 including strain relief members 14, 15, and cover members 11, 12.

As FIG. 1 suggests, the base member 13 may have a plate-like shape matching a shape of a base of the lighting driver 2.

The strain relief members 14, 15 are arranged at opposite end portions of the base member 13 for a strain relief of termination wires 23, 24 of the lighting driver 2. The termination wires 23, such as a two-wire connection, to the left of the depicted lighting driver 2 may bear a mains power connection for termination by the integrated power supply 22, and a communication connection for termination by the wire-bound communication interface 21.

In particular, the wire-bound communication interface 21 may comprise a DALI interface. Although DALI is used in the present disclosure, other field bus protocols may be applied as well.

The cover members 11, 12 are configured for a snap-on engagement of the lighting driver 2 to the base member 13 and for a protective coverage of the strain relief members 14, 15 and the termination wires 23, 24.

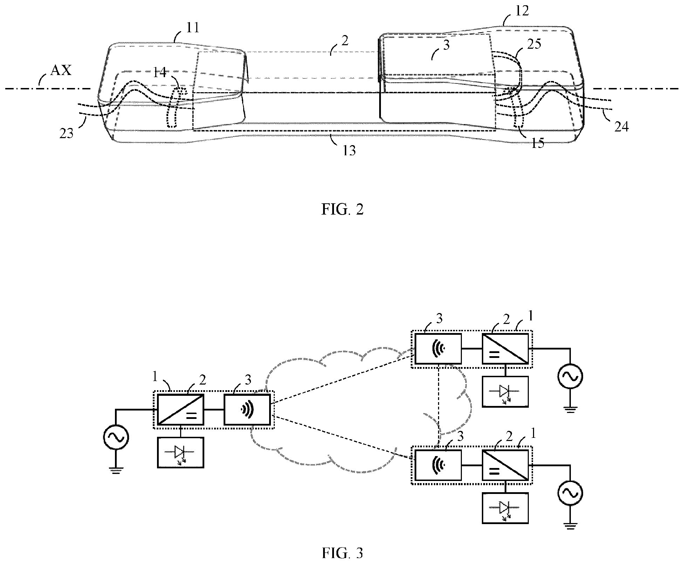

One 12 of the cover members 11, 12 comprises a receptacle 121, such as a cavity, for a snap-on engagement of a communication module 3 to the one 12 of the cover members 11, 12. As can be seen best in FIG. 2, the receptacle 121 for the communication module 3 is preferably arranged at an end of the cover member 12 such that a minimum of wiring 25 of the communication module 3 and the lighting driver 2 is required.

In particular, the receptacle 121 of the one 12 of the cover members 11, 12 may be configured to enclose a housing of the communication module 3.

In particular, the receptacle 121 of the one 12 of the cover members 11, 12 may be configured to arrange the communication module 3 laterally of a connecting axis AX of the cover members 11, 12. This may improve wireless connectivity by exposing the communication module 3 and its wireless antenna from a surrounding metal of an enclosure.

The communication module 3 is configured for a conversion between the wire-bound communication interface 21 and a wire-less communication interface of the communication module 3.

The conversion may be associated with a predetermined DALI channel. More specifically, multiple DALI channels #1, #2, ... can exist, each one associated with its own wireless communication module 3. For example the afore-mentioned conversion may be associated with DALI channel #1.

The communication module 3 may be configured for power supply by the integrated power supply 22 of the lighting driver 2. This enables a deployment of a "passive" type of communication module 3 devoid of a dedicated power supply, by taking advantage of the integrated power supply 22 of the lighting driver 2, such as a DALI power supply.

Alternatively or additionally, the communication module 3 may comprise a dedicated power supply. This enables a deployment of an "active" type of communication module 3 using the dedicated power supply to cover an extra power need, such as in excess of a supply capacity of the integrated power supply 22 of the lighting driver 2. But in general, given the integrated power supply 22 of the lighting driver 2, the "passive" type of communication module 3 would be used to save cost.

FIG. 2 illustrates the strain relief accessory 1 of FIG. 1 in an assembled condition, i.e., an arrangement 1, 2, 3 in accordance with the present disclosure.

The arrangement 1, 2, 3 comprises a strain relief accessory 1 according to the first aspect or any of its implementations; a lighting driver 2; and a communication module 3 for a conversion between a wire-bound communication interface 21 of the lighting driver 2 and a wire-less communication interface of the communication module 3.

The lighting driver 2 and the communication module 3 are in a snap-on engagement with the strain relief accessory 1.

That is to say, the one 12 of the cover members 11, 12 has received the communication module 3 in its receptacle 121, and is in a snap-on engagement with the communication module 3.

Furthermore, the cover members 11, 12 are in respective snap-on engagements with the base member 13 to engage the lighting driver 2. As such, the lighting driver 2 and the communication module 3 are positionally fixed with respect to each other, such that internal wiring may be used to interconnect the communication module 3 and the lighting driver 2. This enables a deployment of a type of communication module 3 devoid of a dedicated strain relief.

The strain relief members 14, 15 of the base member 13 provide a strain relief of the termination wires 23, 24 of the lighting driver 2.

The cover members 11, 12 provide a protective coverage of the strain relief members 14, 15 and the termination wires 23, 24 of the lighting driver 2.

Advantageously, the technical effects and advantages described above in relation with the strain relief accessory 1 equally apply to the arrangement 1, 2, 3 comprising the strain relief accessory 1.

FIG. 3 illustrates lighting systems in accordance with the present disclosure in a wire-less communications scenario.

The lighting systems shown in FIG. 3 respectively comprise an arrangement 1, 2, 3 according to the second aspect (see FIG. 2); and a luminaire indicated by an LED symbol and configured for power supply by the corresponding arrangement 1, 2, 3.

As previously mentioned, the respective communication module 3 comprises a wire-less communication interface indicated by a radio wave symbol.

In particular, the wire-less communication interface may comprise a Bluetooth interface. Although Bluetooth is used in the present disclosure, other protocols such as ZigBee could be applied equally.

As such, the wire-less communication interface may be configured to set up a Bluetooth mesh, as is suggested in FIG. 3 by dashed lines interconnecting the wire-less communication interfaces.

Advantageously, the technical effects and advantages described above in relation with the strain relief accessory 1 equally apply to the lighting system comprising the strain relief accessory 1.

## Claims

1. A strain relief accessory (1) for an independent arrangement of a lighting driver (2) devoid of an enclosure,
the lighting driver (2) comprising
a wire-bound communication interface (21) and
an integrated power supply (22);
the strain relief accessory (1) comprising
a base member (13) including strain relief members (14, 15), and cover members (11, 12);
**characterized in that**:
the strain relief members (14, 15) arranged at opposite end portions of the base member (13) for a strain relief of termination wires (23, 24) of the lighting driver (2);
the cover members (11, 12) being configured for a snap-on engagement of the lighting driver (2) and for a protective coverage of the strain relief members (14, 15) and the termination wires (23, 24);
one (12) of the cover members (11, 12) comprising
a receptacle (121) for a snap-on engagement of a communication module (3) for a conversion between the wire-bound communication interface (21) and a wire-less communication interface (31) of the communication module (3).

2. The strain relief accessory (1) of claim 1,
the receptacle (121) of the one (12) of the cover members (11, 12) being configured to arrange the communication module (3) laterally of a connecting axis (AX) of the cover members (11, 12).

3. The strain relief accessory (1) of claim 1 or claim 2,
the receptacle (121) of the one (12) of the cover members (11, 12) being configured to enclose a housing of the communication module (3).

4. The strain relief accessory (1) of any one of the preceding claims,
the base member (13) having a plate-like shape.

5. An arrangement (1, 2, 3) comprising:
a strain relief accessory (1) according to any one of the preceding claims;
a lighting driver (2); and
a communication module (3) for a conversion between a wire-bound communication interface (21) of the lighting driver (2) and a wire-less communication interface (31) of the communication module (3);
the lighting driver (2) and the communication module (3) being in a snap-on engagement with the strain relief accessory (1).

6. The arrangement (1, 2, 3) claim 5, the lighting driver (2) comprising an emergency lighting driver (2).

7. The arrangement (1, 2, 3) of any one of claims 5 and 6, the wire-less communication interface (31) comprising a Bluetooth interface.

8. The arrangement (1, 2, 3) of claim 7, the wire-less communication interface (31) being configured to set up a Bluetooth mesh.

9. The arrangement (1, 2, 3) of any one of claims 5 to 8, the wire-bound communication interface (21) comprising a DALI interface.

10. The arrangement (1, 2, 3) of any one of claims 5 to 9, the communication module (3) comprising a dedicated power supply.

11. The arrangement (1, 2, 3) of any one of claims 5 to 10, the communication module (3) being configured to be powered by the integrated power supply (22) of the lighting driver (2).

12. The arrangement (1, 2, 3) of any one of claims 5 to 11, the conversion associated with a predetermined DALI channel.

13. A lighting system, comprising
an arrangement (1, 2, 3) as defined in claim 5; and
a luminaire being configured to be powered by the arrangement (1, 2, 3).

## Patentansprüche

1. Zugentlastungszubehör (1) für eine unabhängige Anordnung eines Beleuchtungstreibers (2) frei von einem Gehäuse,
der Beleuchtungstreiber (2) umfassend
eine drahtgebundene Kommunikationsschnittstelle (21) und
eine integrierte Stromzufuhr (22);
das Zugentlastungszubehör (1) umfassend
ein Basiselement (13) einschließlich Zugentlastungselementen (14, 15) und Abdeckelemente (11, 12);
**dadurch gekennzeichnet, dass:**
die Zugentlastungselemente (14, 15) an gegenüberliegenden Endabschnitten des Basiselements (13) für eine Zugentlastung von Abschlussdrähten (23, 24) des Beleuchtungstreibers (2) angeordnet sind;
die Abdeckelemente (11, 12) für einen Schnappeingriff des Beleuchtungstreibers (2) und für eine Schutzabdeckung der Zugentlastungselemente (14, 15) und der Abschlussdrähte (23, 24) konfiguriert sind;
eines (12) der Abdeckelemente (11, 12) umfasst
eine Aufnahme (121) für einen Schnappeingriff eines Kommunikationsmoduls (3) für eine Umwandlung zwischen der drahtgebundenen Kommunikationsschnittstelle (21) und einer drahtlosen Kommunikationsschnittstelle (31) des Kommunikationsmoduls (3).

2. Zugentlastungszubehör (1) nach Anspruch 1,
wobei die Aufnahme (121) des einen (12) der Abdeckelemente (11, 12) konfiguriert ist, um das Kommunikationsmodul (3) seitlich einer Verbindungsachse (AX) der Abdeckelemente (11, 12) anzuordnen.

3. Zugentlastungszubehör (1) nach Anspruch 1 oder 2,
wobei die Aufnahme (121) des einen (12) der Abdeckelemente (11, 12) konfiguriert ist, um ein Gehäuse des Kommunikationsmoduls (3) zu umschließen.

4. Zugentlastungszubehör (1) nach einem der vorstehenden Ansprüche, wobei das Basiselement (13) eine plattenartige Form aufweist.

5. Anordnung (1, 2, 3), umfassend
ein Zugentlastungszubehör (1) nach einem der vorstehenden Ansprüche;
einen Beleuchtungstreiber (2); und
ein Kommunikationsmodul (3) für eine Umwandlung zwischen einer drahtgebundenen Kommunikationsschnittstelle (21) des Beleuchtungstreibers (2) und einer drahtlosen Kommunikationsschnittstelle (31) des Kommunikationsmoduls (3);
wobei sich der Beleuchtungstreiber (2) und das Kommunikationsmodul (3) in einem Schnappeingriff mit dem Zugentlastungszubehör (1) befinden.

6. Anordnung (1, 2, 3) nach Anspruch 5,
der Beleuchtungstreiber (2) umfassend einen Notbeleuchtungstreiber (2).

7. Anordnung (1, 2, 3) nach einem der Ansprüche 5 und 6,
die drahtlose Kommunikationsschnittstelle (31) umfassend eine Bluetooth-Schnittstelle.

8. Anordnung (1, 2, 3) nach Anspruch 7,
wobei die drahtlose Kommunikationsschnittstelle (31) konfiguriert ist, um ein Bluetooth-Mesh einzurichten.

9. Anordnung (1, 2, 3) nach einem der Ansprüche 5 bis 8,
die drahtgebundene Kommunikationsschnittstelle (21) umfassend eine DALI-Schnittstelle.

10. Anordnung (1, 2, 3) nach einem der Ansprüche 5 bis 9,
das Kommunikationsmodul (3) umfassend eine dedizierte Stromzufuhr.

11. Anordnung (1, 2, 3) nach einem der Ansprüche 5 bis 10,
wobei das Kommunikationsmodul (3) konfiguriert ist, um durch die integrierte Stromzufuhr (22) des Beleuchtungstreibers (2) mit Strom versorgt zu werden.

12. Anordnung (1, 2, 3) nach einem der Ansprüche 5 bis 11,
wobei die Umwandlung mit einem zuvor bestimmten DALI-Kanal verknüpft ist.

13. Beleuchtungssystem, umfassend
eine Anordnung (1, 2, 3) wie in Anspruch 5 definiert; und
eine Leuchte, die konfiguriert ist, um durch die Anordnung (1, 2, 3) mit Strom versorgt zu werden.

## Revendications

1. Accessoire réducteur de tension (1) pour un agencement indépendant d'un pilote d'éclairage (2) dépourvu d'une enceinte,
le pilote d'éclairage (2) comprenant
une interface de communication filaire (21) et
une alimentation électrique intégrée (22) ;
l'accessoire réducteur de tension (1) comprenant
un élément de base (13) comportant des éléments réducteurs de tension (14, 15), et
des éléments de recouvrement (11, 12) ;
**caractérisé en ce que :**
les éléments réducteurs de tension (14, 15) sont agencés au niveau de parties d'extrémité opposées de l'élément de base (13) pour une réduction de tension de fils de terminaison (23, 24) du pilote d'éclairage (2) ;
les éléments de recouvrement (11, 12) sont configurés pour une mise en prise par encliquetage du pilote d'éclairage (2) et pour une couverture protectrice des éléments réducteurs de tension (14, 15) et des fils de terminaison (23, 24) ;
un (12) des éléments de recouvrement (11, 12) comprenant
un réceptacle (121) pour une mise en prise par encliquetage d'un module de communication (3) pour une conversion entre l'interface de communication filaire (21) et une interface de communication sans fil (31) du module de communication (3).

2. Accessoire réducteur de tension (1) selon la revendication 1,
le réceptacle (121) de l'un (12) des éléments de recouvrement (11, 12) étant configuré pour agencer le module de communication (3) latéralement d'un axe de liaison (AX) des éléments de recouvrement (11, 12).

3. Accessoire réducteur de tension (1) selon la revendication 1 ou la revendication 2,
le réceptacle (121) de l'un (12) des éléments de recouvrement (11, 12) étant configuré pour enfermer un boîtier du module de communication (3).

4. Accessoire réducteur de tension (1) selon l'une quelconque des revendications précédentes,
l'élément de base (13) ayant une forme de plaque.

5. Agencement (1, 2, 3) comprenant :
un accessoire réducteur de tension (1) selon l'une quelconque des revendications précédentes ;
un pilote d'éclairage (2) ; et
un module de communication (3) pour une conversion entre une interface de communication filaire (21) du pilote d'éclairage (2) et une interface de communication sans fil (31) du module de communication (3) ;
(2) et une interface de communication sans fil (31) du module de communication (3) ;
le pilote d'éclairage (2) et le module de communication (3) étant en prise par encliquetage avec l'accessoire réducteur de tension (1).

6. Agencement (1, 2, 3) selon la revendication 5,
le pilote d'éclairage (2) comprenant un pilote d'éclairage de secours (2).

7. Agencement (1, 2, 3) selon l'une quelconque des revendications 5 et 6,
l'interface de communication sans fil (31) comprenant une interface Bluetooth.

8. Agencement (1, 2, 3) selon la revendication 7,
l'interface de communication sans fil (31) étant configurée pour établir un protocole Bluetooth MESH.

9. Agencement (1, 2, 3) selon l'une quelconque des revendications 5 à 8,
l'interface de communication filaire (21) comprenant une interface DALI.

10. Agencement (1, 2, 3) selon l'une quelconque des revendications 5 à 9,
le module de communication (3) comprenant une alimentation électrique dédiée.

11. Agencement (1, 2, 3) selon l'une quelconque des revendications 5 à 10,
le module de communication (3) étant configuré pour être alimenté par l'alimentation électrique intégrée (22) du pilote d'éclairage (2).

12. Agencement (1, 2, 3) selon l'une quelconque des revendications 5 à 11, la conversion étant associée à un canal DALI prédéterminé.

13. Système d'éclairage, comprenant
un agencement (1, 2, 3) selon la revendication 5 ; et
un luminaire configuré pour être alimenté par l'agencement (1, 2, 3).
